# EUROPÄISCHE PATENTANMELDUNG

(11) **EP 2 099 032 A2**
(43) Veröffentlichungstag der Anmeldung: **09.09.2009**
(21) Anmeldenummer: 09002549.5
(22) Anmeldetag: 24.02.2009
(51) Int. Cl.: G21C 9/06, G21C 19/317

(54) **Verfahren zur katalytischen Rekombination von in einem Gasstrom mitgeführten Wasserstoff mit Sauerstoff sowie Rekombinationssystem zur Durchführung des Verfahrens**

(30) Priorität: 07.03.2008 DE 102008013213
(71) Anmelder: Areva NP GmbH, 91052 Erlangen (DE)
(72) Erfinder: Eckardt, Bernd, 63486 Bruchköbel (DE); Feuerbach, Robert, 65830 Kriftel (DE)
(74) Vertreter: Walkenhorst, Andreas

(57) **Zusammenfassung**

Ein Verfahren und ein System zur katalytischen Rekombination von in einem Gasstrom mitgeführtem Wasserstoff mit Sauerstoff, bei dem der Gasstrom über eine Reaktionszone mit einer Anzahl von Katalysatorelementen geführt wird, wobei dem Gasstrom vor seinem Eintritt in die Reaktionszone Dampf zugemischt wird, sollen auch bei variierenden Betriebsbedingungen oder Betriebsweisen, insbesondere im Hinblick auf bedarfsweise vorgesehene Wasserstoffeinspeisung in dem Dampf-Speisewasserkreislauf der Anlage, eine besonders hohe betriebliche Zuverlässigkeit der Rekombinationseinrichtung gewährleisten. Dazu wird erfindungsgemäß die Einspeiserate des zuzumischenden Dampfes in Abhängigkeit von einem für eine aktuelle Ist-Temperatur in der Reaktionszone charakteristischen Messwert eingestellt.

## Beschreibung

Die Erfindung betrifft ein Verfahren zur katalytischen Rekombination von in einem Gasstrom mitgeführtem Wasserstoff mit Sauerstoff, bei dem der Gasstrom über eine Reaktionszone mit einer Anzahl von Katalysatorelementen geführt wird, wobei dem Gasstrom vor seinem Eintritt in die Reaktionszone Dampf zugemischt wird. Sie bezieht sich weiterhin auf ein Rekombinationssystem katalytischen Rekombination von in einem Gasstrom mitgeführtem Wasserstoff mit Sauerstoff, bei dem eine zur Zuführung des Gasstroms in eine von einer Anzahl von Katalysatorelementen gebildeten Reaktionszone vorgesehene Zuströmleitung zur bedarfsweisen Zumischung von Dampf mit einer Dampfzuleitung verbunden ist.

In einer Vielzahl technischer Anlagen kann es betriebsbedingt oder bei Fehlfunktionen oder Störfällen zu einer Freisetzung brennbarer Gase wie beispielsweise Wasserstoff, Tritium oder Kohlenwasserstoffverbindungen kommen. Beispielsweise kommt es gerade beim Betrieb kerntechnischer Anlagen von Kernkraftanlagen, insbesondere beim Leistungsbetrieb von Leichtwasser-Reaktoren, zur sogenannten radiolytischen Spaltung von Wasser (H₂O)-Molekülen im Reaktorstrahlungsfeld, also zur Bildung so genannter Radiolysegase. Gerade bei Siedewasser-Reaktor (SWR)-Anlagen kann auch eine kontinuierliche Radiolysegasbildung im Kernbereich auftreten, wobei die dabei erzeugten Radiolysegase Wasserstoff und Sauerstoff im erzeugten Dampf im Hauptkreislauf der SWR-Anlage in den Turbinenkondensator transportiert werden. Zusätzlich zu derartigen kontinuierlichen und betriebsbedingten Freisetzungen von Wasserstoff muss in einer kerntechnischen Anlage bei Stör- oder Unfallsituationen, bei denen beispielsweise aufgrund von Kernaufheizung eine Oxidation von Zirkonium auftreten kann, mit der Freisetzung von Wasserstoffgas und Kohlenmonoxid innerhalb des den Reaktorkern umschließenden Sicherheitsbehälters oder Containments gerechnet werden.

Gerade nach einem Kühlmittelverluststörfall können dabei große Mengen an Wasserstoff freigesetzt werden. Insbesondere im Leistungsbetrieb der Anlage bei der kontinuierlichen Bildung von Radiolysegasen kann darüber hinaus eine Anreicherung des erzeugten Wasserstoffs, beispielsweise im Bereich des Turbinenkondensators, einsetzen, so dass in diesen Betriebs- oder Störfallsitutionen innerhalb des Containments oder innerhalb der Komponenten explosive Gasgemische entstehen, wobei die Anreicherung von Wasserstoff in der jeweiligen Atmosphäre soweit möglich ist, dass insbesondere bei entsprechender Sauerstoffanreicherung, da das SWR-Containment zu Beginn Störfall über die ersten Tage noch sicher inertisiert ist) bei einer zufälligen Zündung durch die Verbrennung einer größeren Menge an Wasserstoff die Integrität der jeweiligen Komponenten gefährdet sein könnte.

Zur Verhinderung der Bildung explosiver Gasgemische im Containment oder in anderen Komponenten einer kerntechnischen Anlage aufgrund derartiger Vorgänge werden verschiedene Einrichtungen oder Verfahren diskutiert. Hierzu gehören beispielsweise Einrichtungen wie katalytische Rekombinatoren, katalytisch und/oder elektrisch betriebenen Zündeinrichtungen oder die Kombination der beiden vorgenannten Einrichtungen sowie Verfahren einer permanenten oder nachträglichen Inertisierung des Containments. Bei SWR-Anlagen kann dabei ein Einsatz derartiger Systeme im Zusammenhang mit einer ständigen Absaugung im Turbinenkondensatorbereich vorgesehen sein, da die Aufkonzentrierung behandlungsbedürftiger Gase vorwiegend in den Kondensatorbereichen auftritt.

Beim Einsatz eines katalytischen Rekombinators zur Beseitigung des Wasserstoffs aus der Atmosphäre des Containments durch dessen kontrollierte Oxidation unter Zuhilfenahme eines Katalysators soll insbesondere eine frühzeitige und flammenlose Rekombination des Wasserstoffs mit Sauerstoff erreicht werden. Dabei soll ein signifikanter Druckaufbau als Folge einer virulenten Wasserstoffverbrennung sicher vermieden sein. Um diese Vorgabe auch im Hinblick auf die infolge der Rekombinations- oder Oxidationsreaktion üblicherweise freigesetzte Wärme sicher einhalten zu können, sind katalytische Rekombinatoren üblicherweise ausschließlich für die Umsetzung von Gasen mit einem vergleichsweise geringen Anteil an brennbaren Gasen deutlich unterhalb der Zündgrenze, also beispielsweise einem maximalen Anteil des mitgeführten Wasserstoffs von 4 vol%, ausgelegt.

Beim Einsatz derartiger katalytischer Rekombinationssysteme zur Gasaufbereitung im Bereich des Turbinenkondensators einer Kernkraftanlage ist üblicherweise eine Absaugung im Turbinenkondensatorbereich vorgesehen. Der behandlungsbedürftige, mit Wasserstoff versetzte Gasstrom aus dem Turbinenkondensator wird dabei über eine Zuströmleitung einer geeigneten Rekombinationseinrichtung zugeführt, in der in einer Reaktionszone mit einer Anzahl von geeignet gewählten Katalysatorelementen eine Rekombinationsreaktion des mitgeführten Wasserstoffs mit Sauerstoff zu Wasser eingeleitet wird. Um dabei eine vergleichsweise hohe betriebliche Sicherheit zu gewährleisten, ist in derartigen Systemen üblicherweise eine Vorinertisierung des behandlungsbedürftigen Gasstroms vor dessen Eintritt in die Rekombinatoreinrichtung vorgesehen, wobei durch eine geeignete Zumischung von Dampf zum Gasstrom ein zur Vermeidung einer explosiven Gasreaktion geeignet hoher Inertisierungsgrad eingestellt wird. Zu diesem Zweck ist bei derartigen Gasaufbereitungssystemen eine Dampfzumischung zum Gasstrom vor dessen Eintritt in die Reaktionszone vorgesehen.

Im Hinblick auf betriebsbedingte Schwankungen bei der Produktionsrate der Radiolysegase und sonstiger variierender Betriebsparameter werden derartige Absauge- und Gasbehandlungssysteme üblicherweise zur Sicherstellung einer ausreichend hohen betrieblichen Sicherheit mit ausreichend hohen Sicherheitsaufschlägen, insbesondere betreffend den vorgesehen Dampfanteil im Gasstrom nach der Dampfzumischung, ausgelegt. Die Einspeiseraten des Verdünnungsdampfes liegen dabei insbesondere im Hinblick auf die genannten hohen Sicherheitsaufschläge üblicherweise deutlich über dem eigentlich erwarteten Bedarf, wobei zu dem insbesondere im Hinblick auf die schwankenden Betriebsbedingungen möglicherweise bei einer Vielzahl von Betriebszuständen noch eine Wasserstoffkonzentration im Gasstrom von deutlich weniger als der auslegungsbedingt angenommenen vorliegt. Demzufolge ist bei derartigen Systemen üblicherweise ein erheblich über dem tatsächlichen Bedarf liegender Dampfverbrauch in Kauf zu nehmen. Dieser bedingt aufgrund der sich einstellenden vergleichsweise niedrigen Wasserstoffkonzentrationen, dass die für die Gasaufbereitung vorgesehenen Rekombinationseinrichtungen außerhalb der eigentlich günstigen Parameterbereiche für einen zuverlässigen Rekombinationsbetrieb arbeiten.

Zudem kann in einer kerntechnischen Anlage zur Vermeidung oder Verminderung vom Korrosionseffekten sowie zur Sicherstellung eines vergleichsweise homogenen Wasserstoffgehalts im Strömungsmedium des Hauptkreislaufes eine Begasung mit Wasserstoff zur Erreichung einer "Hydrogened Water Chemistry" (HWC)-Fahrweise vorgesehen sein, die aufgrund der erreichbaren weitgehenden Homogenisierung der Gasanteile im Endeffekt zu einer zusätzlichen Reduktion der im Kühlmittel mitgeführten Radiolysegasmengen führt. Durch derartige Maßnahmen kann die Bildungsrate von Wasserstoff im System und somit die Wasserstoffanreicherung im Turbinenkondensator auf Werte von deutlich unterhalb von 10% der ursprünglich angenommenen Auslegungsanteilen abfallen, so dass bei derartigen Systemen die in das Absaugungs- und Gasbehandlungssystem geschaltete Rekombinationseinrichtung, aufgrund der sich nun einstellenden niedrigen Reaktionstemperaturen mit in der Folge stark verlangsamter Reaktionskinetik und geringen Prozeßüberhitzungsreserven, nur vergleichsweise unzuverlässig arbeitet.

Der Erfindung liegt daher die Aufgabe zugrunde, ein Verfahren zur katalytischen Rekombination von in einem Gasstrom mitgeführtem Wasserstoff mit Sauerstoff der oben genannten Art anzugeben, mit dem auch bei den dabei variierenden Betriebsbedingungen oder Betriebsweisen, insbesondere im Hinblick auf bedarfsweise vorgesehene Wasserstoffeinspeisung in dem Primärkreislauf der Anlage, eine besonders hohe betriebliche Zuverlässigkeit der Rekombinationseinrichtung gewährleistet ist. Des Weiteren soll ein zur Durchführung des Verfahrens besonders geeignetes Rekombinationssystem zur katalytischen Rekombination von in einem Gasstrom mitgeführtem Wasserstoff mit Sauerstoff angegeben werden.

Bezüglich des Verfahrens wird diese Aufgabe erfindungsgemäß gelöst, indem die Einspeiserate des dem Gasstrom vor dessen Eintritt in die Reaktionszone zuzumischenden Dampfes in Abhängigkeit von einem für eine aktuelle Ist-Temperatur in der Reaktionszone charakteristischen Messwert eingestellt wird.

Die Erfindung geht dabei von der Überlegung aus, dass bei der Auslegung eines Gasaufbereitungssystems der genannten Art zur Sicherstellung einer hohen betrieblichen Sicherheit der Fall maximaler erwartbarer Wasserstofffreisetzung zugrunde zu legen ist, so dass bei den üblicherweise vorgesehen Systemen ausgehend von dieser maximal erwarteten Wasserstofffreisetzungsrate eine ausreichend hoch bemessenen Menge an Verdünnungsdampf zugemischt wird, so dass selbst in diesem Extremfall eine ausreichend hohe Inertisierung des der Rekombinationseinheit zugeführten Gasstroms gewährleistet ist. Gerade im Hinblick auf die variierenden Betriebsbedingung und -methoden entspricht dieser Fall jedoch einer extremen Ausnahmesituation, so dass im weitaus größten Betriebsbereich einer derartigen Anlage eine deutliche Überspeisung des Systems mit Zumisch- oder Verdünnungsdampf erfolgt. Eine derartige, über den eigentlichen Bedarf weit hinausgehende Überspeisung des Systems mit Zumischdampf sollte jedoch vermieden werden, da einerseits durch eine derartige Überspeisung ein unerwünscht hoher Dampfverbrauch in Kauf zu nehmen ist, und da andererseits bei einer derartigen Überspeisung in den meisten Betriebsfällen der Anlage der Wasserstoffanteil im in der Reaktionszone eintreffenden Gasstrom derart niedrig ist, dass die Rekombinationseinheit außerhalb ihrer stabilen Betriebsparameter und somit nur unzuverlässig arbeitet. Um dem entgegenzuwirken, sollte eine bedarfsgerechte und an den tatsächlichen aktuellen Betriebsverhältnissen orientierte Dampfzumischung in den Gasstrom erfolgen.

Bei einer derartigen bedarfsgerechten Dampfzumischung sollte als Auslegungsziel eine im jeweiligen Betriebszustand besonders zuverlässige Funktionsfähigkeit der für die Rekombinationsreaktion vorgesehenen Rekombinationseinrichtung vorgesehen sein. Gerade im Hinblick auf die spezifischen Reaktionsbedingungen bei der Umsetzung von Wasserstoff und Sauerstoff zu Wasser und im Hinblick auf die üblicherweise zum Einsatz kommenden Katalysatormaterialien wie vorzugsweise Platin und/oder Palladium sollte dabei die Einstellung eines als besonders günstig angesehenen Betriebstemperaturbereichs in der Reaktionszone von vorzugsweise etwa 300° C bis 600° C angestrebt werden. Um diesem Auslegungsziel, also der Einstellung eines die Rekombinationsreaktion besonders begünstigenden Temperaturniveaus in der Reaktionszone auch bei variierenden Wasserstoffkonzentrationen im Gasstrom, gerecht zu werden, sollte eine über die Temperatur in der Reaktionszone geführte Steuerung oder Drosselung der Dampfeinspeisung oder -zumischung vorgenommen werden.

Das insbesondere angestrebte Temperaturniveau von etwa 300° C bis 600° C in der Reaktionszone kann dabei insbesondere eingestellt werden, indem vorzugsweise ein Wasserstoffgehalt von etwa 3 bis 8 Vol% im in die Reaktionszone einströmenden Gasstrom eingestellt wird. Vorteilhafterweise wird daher die Dampfeinspeisung derart gesteuert oder eingestellt, dass sich eine derartige Wasserstoff-Konzentration im Gasstrom einstellt. Um dabei aber in jedem Fall auch eine ausreichend hohe betriebliche Sicherheit zu garantieren, ist in zusätzlicher oder alternativer vorteilhafter Ausgestaltung die Einstellung eines Dampfanteils im in die Reaktionszone eintretenden Gasstrom von mindestens 70 vol% vorgesehen. Damit ist in jedem Fall eine ausreichende Inertisierung des in die Reaktionszone einströmenden Gasstroms gewährleistet.

Die Einstellung der Dampfzumischung kann dabei im Wesentlichen aufgrund eines geeigneten Temperaturkennwertes in der Reaktionszone als Führungsgröße erfolgen. Um aber eine besonders bedarfsgerechte Anpassung der Dampfeinspeisung an sich ändernde Betriebszustände zu ermöglichen, ist in vorteilhafter Ausgestaltung bei der Einstellung des zuzumischenden Dampfstroms die Berücksichtigung einer Mehrzahl von Temperaturkennwerten in der Reaktionszone und/oder die Berücksichtigung des zeitlichen Verlaufs eines oder mehrerer der genannten Parameter vorgesehen. Dabei kann insbesondere der Temperaturverlauf innerhalb der Reaktionszone oder die Temperaturdifferenz an deren Eintritt und an deren Austritt berücksichtigt werden. Durch die Berücksichtigung der zeitlichen Entwicklung der genannten Parameter kann zudem in der Art einer prädiktiven Einstellung eine besonders zeitnahe Nachführung der Systemparameter vorgenommen werden. Dabei können insbesondere die Eintritts- und die Austrittstemperatur in der Reaktionszone, eine daraus ermittelte Temperaturdifferenz, der Druckverlust des Gasstroms in der Reaktionszone und/oder der zeitliche Verlauf eines oder aller dieser Parameter berücksichtigt werden.

Durch die in Abhängigkeit von der Temperatur in der Reaktionszone geführte Dampfzumischung in den Gasstrom kann insbesondere den variierenden Betriebsbedingungen und -zuständen im Turbinenkondensator einer Kernkraftanlage besonders bedarfsgerecht Rechnung getragen werden. Vorteilhafterweise wird daher der Gasstrom aus dem Turbinenkondensator einer Kernkraftanlage entnommen.

Bezüglich des Rekombinationssystems, bei dem eine zur Zuführung des Gasstroms in eine von einer Anzahl von Katalysatorelementen gebildeten Reaktionszone vorgesehene Zuströmleitung zur bedarfsweisen Zumischung von Dampf mit einer Dampfzuleitung verbunden ist, wird die genannte Aufgabe gelöst, indem eine einem in die Dampfzuleitung geschalteten Dosierventil zugeordnete Steuereinheit dateneingangszeitig mit einer Anzahl von der Reaktionszone zugeordneten Temperatursensoren verbunden ist.

Die Steuereinheit ist dabei vorteilhafterweise als Reglereinheit ausgebildet, der als Führungsgröße ein Temperaturwert der Reaktionszone zugeordnet ist. Die Steuereinheit ist in weiterer vorteilhafter Ausgestaltung mit einem Datenspeicher versehen, in dem die ermittelten Messwerte, also insbesondere die Temperaturkennwerte und/oder Druck oder Partialdruckwerte, hinterlegt und für eine spätere Auswertung des zeitlichen Verlaufs der genannten Kennwerte bereitgehalten werden.

Vorteilhafterweise ist die Zuströmleitung dabei eingangsseitig an den Turbinenkondensator einer Kernkraftanlage angeschlossen. Gerade in einer derartigen Anordnung eignet sich das Rekombinationssystem auch noch zusätzlich als bedarfsweise Hilfsanlage zur Behandlung von Störfallsszenarien im Reaktorsicherheitsbehälter oder Containment. Um dies auf besonders einfache Weise zu ermöglichen, ist in besonders vorteilhafter Ausgestaltung die Zuströmleitung über eine Zweigleitung mit dem Sicherheitsbehälter der Kernkraftanlage verbunden. Dadurch kann die Rekombinationseinrichtung auch bei Störfällen mit Wasserstofffreisetzung im Containment-Bereich zur Oxidation oder Rekombination der zu erwartenden Wasserstoffmengen im Containment oder grundsätzlich auch durch Wasserstoffeinspeisung zur Herstellung oder Erhaltung einer Containmentinertisierung mit Stickstoff verwendet werden. Bei einer derartigen, bedarfsweisen Verwendung wird die Rekombinationseinrichtung vorteilhafterweise primär gleitend auf dem jeweils herrschenden Druckniveau im Containment im Kreislauf betrieben.

Die mit der Erfindung erzielten Vorteile bestehen insbesondere darin, dass durch die Einstellung der Einspeiserate des zuzumischenden Dampfes in Abhängigkeit von der Temperatur in der Reaktionszone eine besonders bedarfsgerechte und somit Ressourcen sparende Dampfeinspeisung ermöglicht ist. Durch eine derartige gezielte Dampfeinspeisung kann somit auch den variierenden Wasserstoffanteilen im behandlungsbedürftigen Gasstrom Rechnung getragen werden, so dass selbst in normalen betrieblichen Bedingungen und auch im Betriebsmodus bei Wasserstoffinjektion (HWC-Fahrweise) in den Dampf-Speisewasserkreislauf aufgrund der dann entsprechend reduzierten zugemischten Dampfmenge am Eintritt der Rekombinationszone eine Wasserstoffkonzentration von vorzugsweise 3 bis 6 Vol% eingestellt werden kann. Somit ist selbst bei den genannten Betriebsbedingungen die Beaufschlagung der Rekombinationseinrichtung mit einer für die Rekombinationsreaktion besonders günstigen Wasserstoffkonzentration und somit die Einhaltung von für die Rekombinationsreaktion besonders günstigen Betriebsbedingungen ermöglicht. Im Vergleich zu herkömmlichen Anlagen ist dabei eine Einsparung der Verdünnungs- oder Treibdampfmenge um bis zu einem Faktor 10 und eine damit einhergehende signifikante Reduktion der Betriebskosten erreichbar. Darüber hinaus ist im Hinblick auf die verringerten Dampfmengen eine Verkleinerung der verwendeten Rohrleitungen und sonstigen Komponenten erreichbar, wobei die Lebensdauer der eingesetzten Komponenten durch die vergleichsweise geringeren mechanischen Belastungen zudem noch erhöht wird.

Mittels dieses Verfahrens und der Einrichtung wird somit eine sehr effektive "**E**fficiency **C**ontr**O**lled **REC**ombination Process Technology", kurz ECO REC - Technology genannt, ermöglicht und eingeführt.

Ein Ausführungsbeispiel der Erfindung wird anhand einer Zeichnung näher erläutert. Darin zeigen:
- Figur 1: ein Rekombinationssystem zur katalytischen Rekombination von in einem Gasstrom mitgeführtem Wasserstoff mit Sauerstoff, und
- Figur 2: eine Rekombinationseinheit für das Rekombinationssystem gemäß Figur 1.

Gleiche Teile sind in beiden Figuren mit denselben Bezugszeichen versehen.

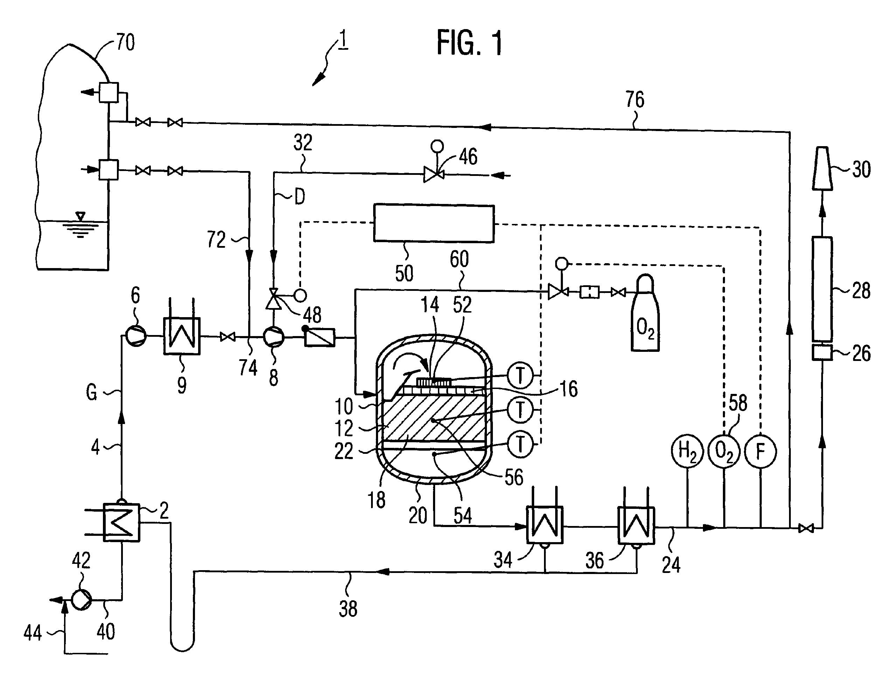

Das Rekombinationssystem 1 nach Figur 1 ist zur katalytischen Rekombination eines brennbaren Gases, im Ausführungsbeispiel Wasserstoff, ausgelegt. Im Ausführungsbeispiel ist das Rekombinationssystem 1 dabei zur Gasaufbereitung oder -behandlung für den Turbinenkondensator 2 einer Kernkraftanlage vorgesehen. Dazu ist in der Art eines Absaugsystems eine Zuströmleitung 4 des Rekombinationssystems 1 eingangsseitig an den Turbinenkondensator 2 der Kernkraftanlage angeschlossen. Ausgangsseitig ist die Zuströmleitung 4, in die zur Förderung des behandlungsbedürftigen Gasstroms G ein Primärkompressor 6 sowie ein Sekundärkompressor 8 geschaltet sind, an eine Rekombinationseinheit 10 angeschlossen.

Die Rekombinationseinheit 10 ist dabei für die eigentliche katalytische Rekombinationsreaktion zur Entfernung des im Gasstrom G mitgeführten Wasserstoffs ausgelegt. Dazu ist innerhalb der Rekombinationseinheit 10 eine Reaktionszone 12 vorgesehen, die von einer Anzahl von Katalysatorelementen gebildet ist. Die Katalysatorelemente können dabei verschiedenartig in an sich bekannten Ausführungsformen ausgeführt sein, wobei insbesondere eine Ausgestaltung als Platten- oder Folienkatalysatoren oder auch als Katalysatorschüttung in Betracht kommt. Im Ausführungsbeispiel ist in der Reaktionszone 12 ein erster Katalysator 14, gebildet aus geeignet gewählten Plattenelementen aus Palladium und/oder Platin, vorzugsweise als Washcoat auf metallischen Trägerkörpern, vorgesehen, der über ein Strömungsverteilungs- und Gleichrichtungssystem 16 auf einer Katalysatorschüttung 18, wiederum auf Platin- und/oder Palladiumbasis, angeordnet ist. Zur Begünstigung geeigneter Reaktionsbedingungen ist der die Reaktionszone 12 umschließende Außenmantel 20 der Rekombinationseinheit 10 mit einer Mantelheizung 22 versehen.

Ausgangsseitig ist die Rekombinationseinheit 10 an eine Abführleitung 24 angeschlossen, über die der behandelte und aufbereitete Gasstrom abgeführt werden kann. Die Abführleitung 24 mündet dabei über eine Trocknungseinrichtung 26 und eine Verzögerungsstrecke 28, vorzugsweise auf Aktivkohlebasis, in einem Abgaskamin 30.

Zur Sicherstellung einer besonders hohen betrieblichen Sicherheit bei der Rekombination des Wasserstoffanteils im Gasstrom G ist das Rekombinationssystem 1 dafür ausgelegt, dass die Rekombinationsreaktion unter inerten Bedingungen und somit unter Ausschluss von Explosionsgefahr durchgeführt werden kann. Dazu ist die Zumischung von Dampf als Inertisierungsmittel zum Gasstrom G vorgesehen, bevor dieser in die Rekombinationseinheit 10 eintritt. Zur bedarfsweisen Zumischung von Dampf D ist die Zuströmleitung 4 dabei mit einer Dampfzuleitung 32 verbunden. Um den dabei zugespeisten Dampf D ausgangsseitig von der Rekombinationseinheit 10 zurück zu gewinnen und dem Anlagenprozess als Wasser erneut verfügbar zu machen, sind in die Abströmleitung 24 eine Anzahl von Kondensatoren 34, 36 geschaltet, in denen der im behandelten Gasstrom mitgeführte Dampfanteil zu Wasser kondensiert wird. Wasserseitig sind die Kondensatoren 34, 36 über eine Rückflussleitung 38 mit dem Turbinenkondensator 2 verbunden. Das solchermaßen über die Rückflussleitung 38 in den Turbinenkondensator 2 zurückgeführte Wasser gelangt von diesem in den in Figur 1 durch die Speisewasserleitung 40 und die Speisewasserpumpe 42 angedeuteten Primärkreislauf der Kernkraftanlage.

Das Rekombinationssytem 1 ist für eine besonders hohe betriebliche Zuverlässigkeit der Rekombinationseinrichtung 10 selbst bei variierenden Betriebsbedingungen und variierenden Wasserstoffanteilen im behandlungsbedürftigen Gasstrom G ausgelegt. Dabei ist insbesondere berücksichtigt, dass infolge variierender Betriebsbedingungen im regulären Betrieb eine schwankende Freisetzung von Wasserstoff als Radiolysegas im Turbinenkondensator 2 zu erwarten ist. Darüber hinaus ist dem Umstand Rechnung getragen, dass die Kernkraftanlage im Ausführungsbeispiel bedarfsweise oder regulär mit einer Wasserstoffeinspeisung in dem Primärkreislauf, wie durch die Einspeiseleitung 44 angedeutet, ausgelegt ist, über die die Korrosionsbeständigkeit des Gesamtsystems erhöht und aufgrund der erreichbaren höheren Homogenisierung im Primärkühlmittel die insgesamt zu beobachtenden Wasserstoffraten reduziert werden können. Um dementsprechend auch bei den zu erwartenden üblicherweise vergleichsweise geringen Wasserstoffraten eine ausreichend hohe katalytische Aktivität in der Rekombinationseinrichtung 10 und somit eine besonders hohe betriebliche Zuverlässigkeit zu gewährleisten, ist das Rekombinationssystem 1 für eine bedarfs- und situationsabhängige Dampfzumischung in den Gasstrom G ausgelegt.

Dabei ist in die Dampfzuleitung 32 eine erste Zwischenstation 46 geschaltet, über die im nachfolgenden Strang der Dampfzuleitung 32 ein Druck von vorzugsweise mehr als dem fünf- bis zehnfachen des kritischen Drucks bei der Lavalgeschwindigkeit eingestellt wird. Anschließend ist in die Dampfzuleitung 32 eine weitere, regelbare Druckreduziereinrichtung oder ein regelbares Dosierventil 48 geschaltet. Das regelbare oder steuerbare Dosierventil 48 ist dabei über eine zugeordnete Steuereinheit 50 angesteuert. Durch diesen Aufbau erfolgt die Absaugung der Gase aus dem Turbinenkondensator 2 durch Dampfstrahlpumpen in Form der Kompressoren 6, 8 mit gleichzeitiger Verdünnung des Gasstroms G mit Wasserdampf, wobei die in Strömungsrichtung gesehen letzte Kompressionsstufe, also der Kompressor 8, als geregelte Dampfstrahlerstufe ausgeführt ist. Durch geeignete Ansteuerung des Dosierventils 48 wird in dieser Dampfstrahlerstufe der Treibdampf am Treibdüseneintritt über einen großen Betriebsbereich oberhalb des kritischen Druckverhältnisses gehalten. Der Strahlervordruckbereich dieser Stufe wird dabei mindestens so hoch gewählt, dass bezogen auf einen Nachdruck von etwa 1 bar das kritische Druckverhältnis um den Faktor 3 bis Faktor 10 überschritten wird. Hierdurch ist insbesondere sichergestellt, dass selbst bei starker Zwischendrosselung in der Strahlpumpentreibdüse in jedem Fall die günstige Lavalgeschwindigkeit mit entsprechend günstigem Fördervermögen für den Gasstrom gewährleistet ist. Die Dampfmenge kann dabei beispielsweise bei einer Zwischendrosselung von 15 bar auf etwa 2 bar um einen Faktor von mehr als 7 reduziert werden und erreicht dennoch bei einer Entspannung auf 1 bar in der Düse noch immer die für die Förderung wichtigen hohen Geschwindigkeiten bis hin zur Lavalgeschwindigkeit.

Für eine besonders bedarfsgerechte Dampfzumischung auch bei variierenden Betriebsbedingungen ist das Rekombinationssystem 1 auf das Auslegungsziel hin ausgelegt, die Katalysatorelemente in der Reaktionszone 12 weitgehend in einem für die Rekombinationsreaktion besonders günstigen Temperaturbereich von beispielsweise zwischen 300° C und 600° C zu betreiben. Um dies zu ermöglichen, ist gezielt die Zumischung einer geeignet bemessenen Dampfmenge in den Gasstrom G derart vorgesehen, dass infolge der sich einstellenden Mischungs- und Konzentrationsverhältnisse die gewünschten Temperaturen in der Reaktionszone erreicht werden. Um dies zu ermöglichen, ist die Steuereinheit 50 als Reglereinheit mit einem Temperaturwert der Reaktionszone 12 als Führungsgröße ausgebildet und dateneingangsseitig mit einer Anzahl von der Reaktionszone 12 zugeordneten Temperatursensoren 52, 54, 56 verbunden. Dabei ist ein erster Temperatursensor 52 im Gaseintrittsbereich der Reaktionszone 12 und ein zweiter Temperatursensor 54 im Gasaustrittsbereich der Reaktionszone 12 angeordnet. Ein dritter Temperatursensor 56 ist hingegen im Innenraum der Reaktionszone 12 angeordnet.

Über die von den Temperatursensoren 52, 54, 56 bereitgestellten Messwerte ist somit die Berücksichtigung geeigneter Temperaturkennwerte zur Sicherstellung des gewünschten Temperaturniveaus bei der Dampfeinspeisung möglich. Darüber hinaus können auch noch weitere Parameter wie beispielsweise Temperaturprofile oder auch das zeitliche Verhalten der einzelnen Temperaturkennwerte oder auch die Differenztemperatur zwischen Gaseintritt und Gasaustritt geeignet ausgewertet und berücksichtigt werden. Darüber hinaus ist die Steuereinheit 50 mit einem nicht dargstellten Datenspeicher versehen, so dass die genannten Messwerte geeignet zwischengespeichert und bedarfsweise weiter ausgewertet werden können.

Zur weiteren Systemüberwachung sind an die einzelnen Leitungen, insbesondere an die Ableitung 24, weitere Sensoren, insbesondere Materialsensoren, angeschlossen. Dabei kann beispielsweise über einen Sauerstoffsensor 58 ein Sauerstoffmangel im Abgasstrom festgestellt werden, der über einen Zuspeisestrang 60 für Sauerstoff bedarfsweise geeignet kompensiert werden kann.

Des Weiteren ist die Steuereinheit 50 dafür ausgelegt, im Betriebsfall in jedem Fall eine ausreichende Inertisierung des Gasstroms G vor dessen Eintritt in die Rekombinationseinheit 10 sicherzustellen. Dazu ist die Steuereinheit 50 dafür ausgelegt, die Einspeiserate des zu zumischenden Dampfes D derart einzustellen, dass der Gasstrom G bei seinem Eintritt in die Reaktionszone 12 einen Dampfgehalt von mindestens 70 vol% aufweist.

Das Rekombinationssystem 1 ist somit für eine besonders flexible und bedarfsgerechte Dampfzumischung in den Gasstrom G ausgelegt, so dass eine zuverlässige Gasbehandlung des aus dem Turbinenkondensator 2 abgesaugten Gases gewährleistet ist. Darüber hinaus ist das Rekombinationssystem 1 aber auch für eine bedarfsweise Zuschaltung bei der Behandlung von Störfallsszenarien mit der Freisetzung von Wasserstoff im Sicherheitsbehälter oder Containment 70 der kerntechnischen Anlage ausgelegt. Dazu ist die Zuströmleitung 4 des Rekombinationssystems 1 über eine Zweigleitung 72, die an einer Einspeisestelle 74 in die Zuströmleitung 4 mündet, mit dem Containment 70 verbunden. In einem derartigen Störfallsszenario, bei dem über die Zweigleitung 72 behandlungsbedürftiges Medium in die Rekombinationseinrichtung 10 gefördert wird, ist eine Betriebsweise im Wesentlichen im Gleichdruckmodus auf einem Druck des jeweils herrschenden Containment-Druckniveaus im Kreislauf vorgesehen. Dazu ist an die Abströmleitung 24 eine Rückführleitung 76 angeschlossen, über die im Bedarfsfall der Kreislaufbetrieb im Austausch mit dem Containment 70 hergestellt werden kann.

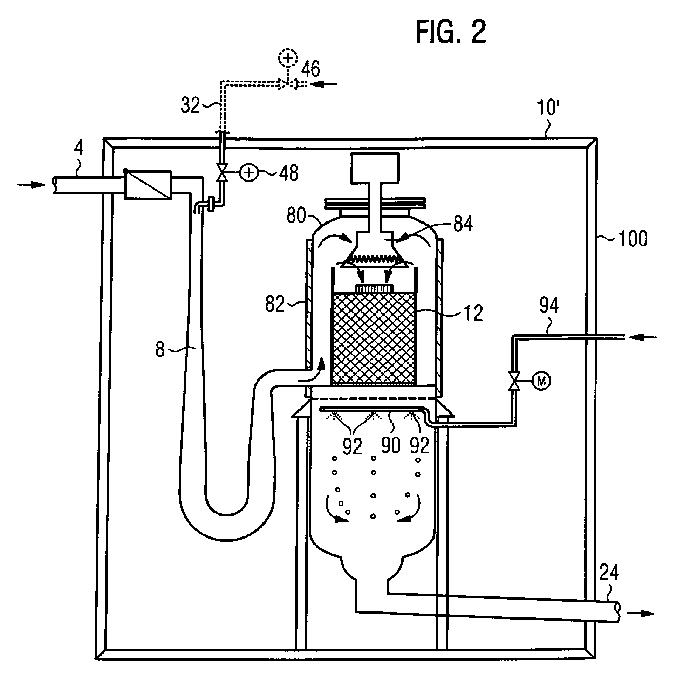

Eine alternative Ausführungsform der Rekombinatoreinrichtung 10 ist in Figur 2 gezeigt. Dabei ist in besonders günstiger Ausgestaltung die Reaktionszone 12 innerhalb eines inneren Mantels angeordnet, der in einem äußeren Mantel 82 integriert ist. Der Zuströmraum zwischen der Reaktionszone 12 und dem äußeren Mantel wird durch eine direkt am äußeren Mantel 82 angebrachte Heizeinrichtung beheizt, so dass die gewünschten Temperaturen eingehalten werden können. Des Weiteren ist eine Zusatzheizung 84 im Einströmbereich für den Gasstrom G vorgesehen. Im Ausführungsbeispiel nach Figur 2 ist der Reaktionszone 12 ein Sprühsystem 90 mit einer Anzahl von Sprühdüsen 92 nachgeschaltet, denen über eine Zuleitung 94 Kühlwasser zuführbar ist. Über das Sprühsystem 90 ist somit eine Einspritzkühlung oder Spraykühlung für den aus der Reaktionszone 12 abströmenden Gasstrom möglich, so dass eine Rückkühlung des behandelten Gasstroms auch ohne nachgeschaltete Kondensatoren ermöglicht ist. Durch eine derartige Anordnung ist somit eine besonders kompakte Bauweise innerhalb einer Rahmenkonstruktion 100 möglich, so dass insbesondere auch bei geringstem Raumangebot eine Nachrüstung bestehender Anlagen möglich ist. Durch die Trennung der Druckbehälterummantelung 82 von der Reaktionszone 12 mittels Ringspalt sowie die direkte nachfolgende Spraykühlung wird zudem eine Entkopplung der hohen Temperaturen in der Reaktionszone 12 vom drucktragenden Außenbereich erreicht, so dass auch Reaktionstemperaturen von mehr als 500° C - ohne direkte Auswirkungen auf die Werkstoffe, inklusive der limitierenden Kenndaten des drucktragenden Teiles - ermöglicht sind. Zusätzlich ist im System nach Figur 2 eine rekuperative Gasaufwärmung durch die Hochtemperatursektion und Mantelaußenbeheizung vorgesehen.

### Bezugszeichenliste

- 1: Rekombinationssystem
- 2: Rekombinationseinheit
- 4: Zuströmleitung
- 6: Primärkompressor
- 8: Sekundärkompressor
- 10: Rekombinationseinheit
- 12: Reaktionszone
- 14: Katalysator
- 16: Gleichrichtungssystem
- 18: Katalysatorschüttung
- 20: Außenmantel
- 22: Mantelheizung
- 24: Abführleitung
- 26: Trocknungseinrichtung
- 28: Verzögerungsstrecke
- 30: Abgaskamin
- 32: Dampfzuleitung
- 34: Kondensatoren
- 36: Kondensatoren
- 38: Rückflussleitung
- 40: Speisewasserleitung
- 42: Speisewasserpumpe
- 44: Einspeiseleitung
- 46: Zwischenstation
- 48: Dosierventil
- 50: Steuereinheit
- 52: Temperatursensoren
- 54: Temperatursensoren
- 56: Temperatursensoren
- 58: Sauerstoffsensor
- 60: Zuspeisestrang
- 70: Containment
- 72: Zweigleitung
- 74: Einspeisestelle
- 76: Rückführleitung
- 80: Mantel
- 82: Heizeinrichtung
- 84: Zusatzheizung
- 90: Sprühsystem
- 92: Sprühdüsen
- 94: Zuleitung
- 100: Rahmenkonstruktion

## Patentansprüche

1. Verfahren zur katalytischen Rekombination von in einem Gasstrom mitgeführtem Wasserstoff mit Sauerstoff, bei dem der Gasstrom über eine Reaktionszone mit einer Anzahl von Katalysatorelementen geführt wird, wobei dem Gasstrom vor seinem Eintritt in die Reaktionszone Dampf zugemischt wird, und wobei die Einspeiserate des zuzumischenden Dampfes in Abhängigkeit von einem für eine aktuelle Ist-Temperatur in der Reaktionszone charakteristischen Messwert eingestellt wird.

2. Verfahren nach Anspruch 1, bei dem die Einspeiserate des zuzumischenden Dampfes derart eingestellt wird, dass der Gasstrom bei seinem Eintritt in die Reaktionszone einen Dampfgehalt von mindestens 70 Vol% aufweist.

3. Verfahren nach Anspruch 1 oder 2, bei dem die Einspeiserate des zuzumischenden Dampfes derart eingestellt wird, dass der Gasstrom bei seinem Eintritt in die Reaktionszone einen Wasserstoffgehalt zwischen 3 und 8 Vol% aufweist.

4. Verfahren nach einem der Ansprüche 1 bis 3, bei dem die Einspeiserate des zuzumischenden Dampfes in Abhängigkeit von für eine Mehrzahl aktueller Ist-Temperaturen in der Reaktionszone, vorzugsweise zumindest einer aktuellen Ist-Eingangstemperatur und einer aktuellen Ist-Ausgangstemperatur der Reaktionszone, charakteristischen Messwerten eingestellt wird.

5. Verfahren nach einem der Ansprüche 1 bis 4, bei dem ein für den aktuellen Druckverlust in der Reaktionszone charakteristischer Messwert bei der Einstellung der Einspeiserate des zuzumischenden Dampfes berücksichtigt wird.

6. Verfahren nach einem der Ansprüche 1 bis 5, bei dem die zeitliche Entwicklung der jeweiligen charakteristischen Messwerte bei der Einstellung der Einspeiserate des zuzumischenden Dampfes berücksichtigt wird.

7. Verfahren nach einem der Ansprüche 1 bis 6, bei dem der Gasstrom aus dem Turbinenkondensator einer Kernkraftanlage entnommen wird.

8. Rekombinationssystem (1) zur katalytischen Rekombination von in einem Gasstrom (G) mitgeführtem Wasserstoff mit Sauerstoff, bei dem eine zur Zuführung des Gasstroms (G) in eine von einer Anzahl von Katalysatorelementen gebildeten Reaktionszone (12) vorgesehene Zuströmleitung (4) zur bedarfsweisen Zumischung von Dampf mit einer Dampfzuleitung (32) verbunden ist, wobei eine einem in die Dampfzuleitung (32) geschalteten Dosierventil (48) zugeordnete Steuereinheit (50) dateneingangsseitig mit einer Anzahl von der Reaktionszone (12) zugeordneten Temperatursensoren (52, 54, 56) verbunden ist.

9. Rekombinationssystem (1) nach Anspruch 8, dessen Steuereinheit als Reglereinheit mit einem Temperaturwert der Reaktionszone (12) als Führungsgröße ausgebildet ist.

10. Rekombinationssystem (1) nach Anspruch 8 oder 9, dessen Steuereinheit dateneingangsseitig mit einer Anzahl von Gassensoren verbunden ist.

11. Rekombinationssystem (1) nach einem der Ansprüche 8 bis 10, dessen Steuereinheit dateneingangsseitig mit einer Mehrzahl von der Reaktionszone (12) zugeordneten Temperatursensoren (52, 54, 56) verbunden ist.

12. Rekombinationssystem (1) nach einem der Ansprüche 8 bis 11, dessen Steuereinheit (50) mit einem Datenspeicher versehen ist.

13. Rekombinationssystem (1) nach einem der Ansprüche 8 bis 12, dessen Zuströmleitung (4) eingangsseitig an den Turbinenkondensator einer Kernkraftanlage angeschlossen ist.

14. Rekombinationssystem (1) nach Anspruch 13, dessen Zuströmleitung (4) über eine Zweigleitung (72) mit dem Sicherheitsbehälter der Kernkraftanlage verbunden ist.

15. Rekombinationssystem (1) nach einem der Ansprüche 1 bis 14, dessen Dampfzuleitung (32) mit einer Dampfstrahlpumpe (8) verbunden ist, deren Treibdampfdruck regelbar ist und nach dem Sekundärkompressor (48) mehr als das fünf- bis zehnfache des Dampfstrahlpumpenaustrittsdruckes beträgt.
